**Europäisches Patentamt**

**European Patent Office**

**Office européen des brevets**

(19)

(11) Veröffentlichungsnummer: **0 218 106**

**A1**

(12) # EUROPÄISCHE PATENTANMELDUNG

(21) Anmeldenummer: **86112356.0**

(22) Anmeldetag: **06.09.86**

(51) Int. Cl.⁴: **B23K 11/24**

Die Bezeichnung der Erfindung wurde geändert (Richtlinien für die Prüfung im EPA, A-III, 7.3).

(30) Priorität: **10.09.85 CH 3892/85**

(43) Veröffentlichungstag der Anmeldung: **15.04.87 Patentblatt 87/16**

(84) Benannte Vertragsstaaten: **CH DE FR GB IT LI NL SE**

(71) Anmelder: **ELPATRONIC AG Baarerstrasse 117 CH-6300 Zug(CH)**

(72) Erfinder: **Mettler, Paul Wagenrainstrasse 23 CH-5620 Bremgarten(CH)**

(74) Vertreter: **Hotz, Klaus, Dipl.-El.-Ing. / ETH c/o SOUDRONIC AG Industriestrasse 35 Postfach 11 CH-8962 Bergdietikon(CH)**

(54) **Verfahren und Anordnung zum Regeln einer Widerstandsschweissmaschine.**

(57) Beschrieben sind ein Verfahren und eine Anordnung zum Regeln des Schweißvorganges bei einer Widerstandsschweißmaschine durch Abfühlen des Schweißstromes und Steuern der Schweißzeit. Ein erster Integrator (20) bestimmt die einem Schweißpunkt zuzuführende Soll-Gesamtenergie aus einem mittels eines Funktionsgebers (18) vorgegebenen Soll-Schweißstrom und einer vorgegebenen Schweißzeit. Eine mit dem Schweißstromfühler (14) verbundene Integriereinrichtung (25) bestimmt die zugeführte Ist-Energie. Ein Vergleicher (24) vergleicht die Soll-Gesamtenergie mit der Ist-Energie, um den Schweißstrom mittels eines Start/Stop-Moduls (30) bei Soll-Istwert-Gleichheit abzuschalten. Auf diese Weise werden Netzspannungsschwankungen durch Verlängern oder Verkürzen der Zeit, in welcher dem Schweißpunkt Energie zugeführt wird, kompensiert, um die Güte der Schweißung von Schweißpunkt zu Schweißpunkt sicherzustellen.

EP 0 218 106 A1

# Fig. 1

0 218 106

## Verfahren und Anordnung zum Regeln des Schweißvorganges bei einer Widerstandsschweißmaschine

Die Erfindung betrifft ein Verfahren zum Regeln des Schweißvorganges bei einer Widerstandsschweißmaschine durch Abfühlen des Schweißstromes und Steuern der Schweißzeit. Außerdem betrifft die Erfindung eine Anordnung zur Durchführung dieses Verfahrens, mit einem Schweißstromfühler sowie mit einer Ablaufsteuereinrichtung und einem Start/Stop-Modul zum Steuern der Schweißzeit.

Aus der US-A-3 586 815 ist es bekannt, die Dauer des Schweißstroms in einem Schweißspiel durch Abfühlen eines vorgewählten Widerstands in dem Schweißstromkreis zwischen den Schweißelektroden zu steuern. Bei älteren Schweißsystemen, bei denen eine vorbestimmte voreinstellbare Impulszahl gezählt und die Schweißzeit beim Erreichen dieser Impulszahl beendet wird, ist es nicht möglich, Veränderungen in den zu verschweißenden Materialien, des auf das Schweißgut ausgeübten Druckes, des Oberflächenzustands,der Netzspannung usw. zu berücksichtigen. Zur Beseitigung dieses Nachteils wird deshalb gemäß der US-A-3,586,815 die Dauer der Schweißzeit automatisch gesteuert, während der den Schweißelektroden elektrische Energie zugeführt wird. Zu diesem Zweck werden die Elektrodenspannung und der Schweißstrom abgefühlt und benutzt, um daraus den Widerstand zwischen den Schweißelektroden zu bestimmen, und die Schweißung wird beendet, sobald eine vorgewählte Änderung im Schweißwiderstand festgestellt wird. Es ist also erforderlich, zwei Parameter, nämlich die Spannung und den Strom zu bestimmen und daraus den Widerstand zwischen den Schweißelektroden zu ermitteln. Auf diese Weise sollen Faktoren, die einen nachteiligen Einfluß auf die Güte des Schweißergebnisses haben können, wie beispielsweise Netzspannungsänderungen, ausgeschaltet werden. Das Bestimmen von zwei Parametern zum Ermitteln eines dritten Parameters ist ein fehlerbehaftetes Verfahren, das zusätzlich mit dem Nachteil behaftet ist, daß sich gewisse Bedingungen bei der Schweißung ändern können, die eine Veränderung der abgefühlten Spannung oder des abgefühlten Stroms ohne eine korrelative Änderung des Schweißwiderstands verursachen können. Es ist deshalb erforderlich, die Dauer der Abtastzeit gemäß gewissen elektrischen Bedingungen der Last zu verändern. Es wird deshalb insbesondere die Amplitude des Laststroms abgefühlt und die Abtastzeit gemäß Änderungen im abgefühlten Laststrom verändert, wobei von der Annahme ausgegangen wird, daß beispielsweise ein großer Laststrom auf einen Anstieg der Netzspannung zurückzuführen ist. Es muß also zusätzlicher Aufwand für Änderungen getrie ben werden, die sich zwar auf die abgefühlte Spannung oder den abgefühlten Strom auswirken, aber überhaupt keine Widerstandsänderung verursachen.

Die US-A-4,289,951 beschreibt ein Leistungsfaktorüberwachungs-und -regelsystem, mittels welchem Verzerrungen der Netzspannungswellenform, die durch mehrere gleichzeitig an derselben Netzleitung betriebene Schweißeinrichtungen verursacht werden und verhindern, daß der Netzspannungsnulldurchgang als genauer Referenzpunkt für die Zeitsteuerung benutzt werden kann, kompensiert werden, indem Widerstandsänderungen abgefühlt werden, die bei der Bildung der Schweißung in der Sekundärwicklung eines Schweißtransformators auftreten. Durch Messen der Widerstandsänderung, die in Beziehung zur Schweißgüte steht, in der Sekundärwicklung des Schweißtransformators und durch Abfühlen der Leistungsfaktoränderung im Primärkreis des Schweißtransformators lassen sich Überwachungsvorrichtungen in den Zuleitungen zu den Schweißelektroden vermeiden. Durch Vergrößern oder Verkleinern des Schweißstroms wird dann die bei der Schweißung zugeführte Energie geregelt.

Die DE-A-31 13 250 beschreibt ein Verfahren und eine Einrichtung zur Überwachung und Regelung einer Widerstandsschweißung, um Änderungen solcher Faktoren wie Netzspannung, Werkstoffdicke und Elektrodendurchmesser zu kompensieren, um die Sollschweißqualität ohne erhebliche Änderung der Sollschweißzeit zu erreichen. Zu diesem Zweck wird der Widerstand der Schweißbuckel überwacht, um den Schweißstrom aufgrund eines ermittelten $\Delta R$-Sollwerts zu regeln, ohne die Schweißzeit merklich zu beeinflussen. Es werden dafür die Widerstandswerte von Schweißbuckeln und die Geschwindigkeit der Wider standsänderung während der Aufheizphase der Schweißung überwacht, und die gemessenen Widerstandswerte werden mit einer vorgegebenen Sollwiderstandskurve verglichen. Wenn die Vergleichsergebnisse eine vorgesehene Schweißzeit ergeben, die wesentlich größer oder kleiner als die Sollschweißzeit ist, erfolgt eine dynamische Änderung des Schweißstroms und damit der bei der Schweißung erzeugten Wärme. Da in diesem Fall der Widerstand der Schweißbuckel aus der an den Schweißelektroden abgetasteten Spannung und aus dem von der Primärwicklung des Schweißtransformators aufgenommenen Schweißstrom ermittelt wird, ergeben sich die gleichen Probleme, die oben im Zusammenhang mit der US-A-3,586,815 dargelegt worden sind.

Die DE-A-33 10 602 beschreibt eine durch Mikroprozessor gesteuerte Steuereinheit für Widerstandsschweißmaschinen, bei der zur Kompensation von Netzspannungsschwankungen und Störungen die richtige Zündzeit berechnet wird, um eine konstante Leistung während der Netzspannungsschwankungen und Störungen aufrechtzuerhalten. Diese bekannte Steuereinheit ist lediglich für eine Einphasenschweißmaschine vorgesehen und erfordert einen erheblichen Rechneraufwand.

Schließlich beschreibt die EP-A-0 142 582 eine adaptive Punktschweißregelung, bei der Unterschiede im Schweißstrom, welcher zum Erzielen einer optimalen Schweißung erforderlich ist, ermittelt werden, indem die zeitliche Änderung des Widerstands während desjenigen Teils des Schweißspiels bestimmt wird, in welchem der Widerstand ansteigt. Die Schweißregelung verkleinert den Schweißstrom, wenn die zeitliche Änderung des Widerstands einen Maximalwert übersteigt, und vergrößert den Schweißstrom, wenn die zeitliche Änderung des Widerstands kleiner als ein Minimalwert wird.Diese Regelung basiert also auch auf der Ermittlung des Widerstands zwischen den Scheißelektroden zum entsprechenden Verändern des Schweißstroms, was mit den oben dargelegten Problemen verbunden ist. Diese EP-A-0 142 582 beschreibt auch ·Probleme, die bei zeitadaptiven Schweißregelungen auftreten,und kritisiert, daß solche zeitadaptiven Regelungen nicht geeignet sind, das Schweißen von in weiten Bereichen variierenden Stahllegierungen mit derselben Einstellung des Schweißstroms zu gestatten. Die daraus bekannte Schweißregelung ist deshalb so ausgebildet, daß sie in der Lage ist, automatisch einen optimalen Schweißstrom oder eine optimale Maske des Schweißstroms zu wählen, unmittelbar nachdem den Elektroden elektrische Energie zugeführt und die zeitliche Änderung des Widerstands des Werkstücks ermittelt worden ist. Das kann zwar die Probleme, die mit der Ermittlung des Widerstands aus zwei abgefühlten Parametern verbunden sind, zum Teil aufwiegen, es erfordert jedoch zusätzlichen Aufwand, der nur bei entsprechend teueren Schweißmaschinen gerechtfertigt sein dürfte. Dieser zusätzliche Aufwand ist in der Praxis üblicherweise nicht gerechtfertigt, weil der Schweißmaschinenbediener vor der ersten Schweißung die dem zu schweißenden Werkstoff entsprechende Sollkurve (z.B. des Stroms oder des Widerstands über der Zeit) passend wählen wird.

Der vorstehend in chronologischer Reihenfolge dargelegte Stand der Technik zeigt, daß das Problem, daß der Schweißstrom durch Netzspannungsschwankungen nachteilig beeinflußt wird, bereits erkannt worden ist und daß versucht worden ist, diesem Problem dadurch zu begegnen, den Schweißstrom und/oder die Schweißzeit entsprechend Netzspannungsschwankungen nachzuregeln. Die beste Lösung wäre, den Schweißstrom genau der Sollkurve über der Zeit folgen zu lassen. Das bedeutete aber einen großen Rechneraufwand, der nur bei großen und teueren Schweißmaschinen gerechtfertigt ist. Nachteilig ist überdies im Stand der Technik, daß zum Nachregeln des Schweißstroms und/oder der Schweißzeit auf die Ermittlung des Schweißwiderstands zurückgegriffen wird.

Aufgabe der Erfindung ist es, ein Verfahren und eine Anordnung der eingangs genannten Art so zu verbessern, daß sich beim punktweisen Schweißen die Güte der Schweißung auf weniger aufwendige Weise, genauer und von Schweißpunkt zu Schweißpunkt reproduzierbar sicherstellen läßt.

Diese Aufgabe ist erfindungsgemäß durch die Schritte gelöst:

a) Vorgeben des Soll-Schweißstromes $i_S$ und Bestimmen der zuzuführenden Soll-Gesamtenergie aus dem Sollwert-Integral $\int i_S^2 \, dt$ über einer vorgegebenen Schweißzeit $t_R$,

b) Messen des Ist-Schweißstromes $i_I$,

c) Bestimmen der zugeführten Ist-Energie aus dem Istwert-Integral $\int i_I^2 \, dt$,

d) Vergleichen der zugeführten Ist-Energie mit der Sollgesamtenergie, und, sobald die Ist-Energie mit dem Sollwert-Integral übereinstimmt,

e) Abschalten des Schweißstromes,

f) Wiederholen der Schritte a) -e); bzw.

durch einen ersten Integrator zum Bestimmen der zuzuführenden Soll-Gesamtenergie aus einem mittels eines Funktionsgebers vorgegebenen Soll-Schweißstrom -und einer vorgegebenen Schweißzeit,

durch eine mit dem Schweißstromfühler verbundene Integriereinrichtung zum Bestimmen der zugeführten Ist-Energie,

durch einen mit dem ersten Integrator und der Integriereinrichtung verbundenen Soll-Gesamtenergie/Ist-Energie-Vergleicher zum Abschalten des Schweißstromes mittels des Start/Stop-Moduls bei Soll-Istwert-Gleichheit durch Übersteuern der Ablaufsteuereinrichtung.

Durch das Verfahren und die Anordnung nach der Erfindung wird der Schweißstrom, der durch Netzspannungsschwankungen und andere Faktoren (Rost zwischen zu verschweissenden Blechen, Schwankungen der Preßkraft und der Werkstoffdicke, Umpolungsverluste wegen Sättigung im Schweißtransformator, usw.) beeinflußt wird, zwar wie im Stand der Technik abgefühlt, im Gegensatz dazu wird erfindungsgemäß jedoch nicht der Strom geregelt, sondern die zugeführte Energie, die sich aus dem Integral des Schweißstroms und der Schweißzeit ergibt. Es wird also die zugeführte Energiemenge und damit die Wärmemenge, die in den Schweißpunkt einfließt, geregelt. Dazu wird erfindungsgemäß die Schweißzeit, je nachdem, ob der Schweißstrom die Vorgabe in Form einer Sollkurve über-oder unterschreitet, gegenüber der vorgegebenen Schweißzeit so verkürzt bzw. verlängert, daß die durch die Fläche unter der Sollkurve vorgegebene zuzuführende Soll-Gesamtenergie gleich der durch die Fläche unter der tatsächlich gefahrenen Schweißstromkurve gegebenen zugeführten Ist-Energie ist. Es ergeben sich dadurch zwar je nach Schwankung der Netzspannung od.dgl. Schweiß zeiten, die von der vorgegebenen Schweißzeit abweichen, da solche Schwankungen jedoch sowohl in positiver als auch in negativer Richtung auftreten werden, werden sich sowohl kürzere als auch längere Schweißzeiten ergeben, so daß im Mittel mit keiner nennenswerten Überschreitung der Summe der vorgegebenen Schweißzeiten zu rechnen ist. Längere Schweißzeiten werden überhaupt .auch nur beim Fließbandschweißen von unmittelbar aufeinanderfolgenden Werkstücken oder beim Widerstandsnahtschweißen, bei dem die Naht aus unmittelbar aufeinanderfolgenden Schweißpunkten besteht, von Bedeutung sein. Bei einer Punkt-oder Buckelschweißmaschine, bei der ohnehin Handhabungszeitspannen zwischen den einzelnen Schweißpunkten eingeplant werden müssen, sind Verlängerungen der Schweißzeit, die ohnehin nur im Mikrosekundenbereich liegen würden, vernachlässigbar.

In der Ausgestaltung der Erfindung nach den Ansprüchen 2 und 5 erfolgt die Messung des Ist-Schweißstromes in festen Intervallen, für die vorzugsweise die Intervalle von 500 µs benutzt werden, die bei einer Dreiphasen-Punktschweißmaschine mit primär-oder sekundärseitiger Gleichrichtung, bei der jeder Schweißimpuls aus einzelnen Buckeln entsprechend den einzelnen Phasen R, S, T besteht, welche durch die Netzfrequenz von 50 Hz gegeben sind, vorgegeben sind. Dadurch, daß die zugeführte Ist-Energie für jeden gemessenen Strom jeweils über einem Intervall von 500 µs bestimmt wird, läßt sich der Zeitpunkt, in welchem die zugeführte Ist-Energie gleich der zuzuführenden Soll-Gesamtenergie ist, rechtzeitig ermitteln. Die Istwert-Integrale jedes Meßintervalls werden zwar saldierend gespeichert und der Saldo jeweils mit der Soll-Gesamtenergie verglichen, stattdessen kann jedoch beispielsweise auch eine Tastspeicherschaltung od.dgl. mit fortlaufender Zeitzählung für diesen Zweck benutzt werden. Außerdem kann der in dieser Ausgestaltung der Erfindung benutzte A/D-Wandler entfallen, wenn ein digitaler Schweißstromfühler statt des vorausgesetzten analogen Schweißstromfühlers benutzt wird.

In der Ausgestaltung der Erfindung nach Anspruch 3 wird als vorgegebene Schweißzeit die Schweißzeit für einen Schweißpunkt vorzugsweise dann gewählt, wenn es sich um Einimpulsschweißen ohne Stromanstieg und/oder Stromabfall handelt. Beim Einimpulsschweißen mit Stromanstieg und/oder Stromabfall wird die Fläche unter der Schweißstromsollkurve über der Schweißzeit in Teilflächen aufgeteilt, wobei jeder Teilfläche dann eine Schweißzeit zugeordnet ist, die ein Teil der vorgegebenen Gesamtschweißzeit ist. Beim Einimpulsschweißen mit Stromanstieg und Stromabfall würden zweckmäßig drei Teilflächen gewählt, eine für die Zeit des Stromanstiegs, eine für die Zeit konstanten Schweißstroms und eine für die Zeit des Stromabfalls. Beim Einimpulsschweißen mit Stromprogramm, bei dem der Strom .in verschiedener Stärke wirkt, z.B. als Schweiß-und Nachwärmstrom bei unveränderter Krafteinstellung, wird in der Ausgestaltung der Erfindung nach Anspruch 3 anschließend an das Abschalten des Schweißstroms als neuer Soll-Strom der Soll-Nachwärmstrom eingestellt und statt der definitionsgemäß (vgl. DIN 44753, S.8-10)eigentlich dem Schweißstrom zugeordneten Schweißzeit die Nachwärmzeit gesteuert. Die in der Beschreibung und in den Ansprüchen verwendeten Begriffe "Schweißzeit" und "Schweißstrom" umfassen also allgemein jede beim Schweißen auftretende Stromzeit (d.h. Vorwärm-, Schweiß-oder Nachwärmzeit bzw. jeden dem Schweißpunkt zugeführten Strom - (d.h. Vorwärm-, Schweiß-oder Nachwärmstrom).

In der Ausgestaltung der Erfindung nach Anspruch 6 enthält der Stellwerttabellen-Modul beispielsweise eine Tabelle für die Umwandlung der durch die Schweißstromsollkurve $i_S = f(t)$ vorgegebenen Schweißstromsollwerte in entsprechende Phasenanschnittwinkel für die Einstellung der diesem Schweißstrom entsprechenden Netzspannung.

Ausführungsbeispiele der Erfindung werden im folgenden unter Bezugnahme auf die Zeichnung näher beschrieben. Es zeigen

Fig. 1 ein Blockschaltbild einer Anordnung nach der Erfindung zum Regeln des Schweißvorganges bei einer Widerstandsschweißmaschine und

die Fig. 2a und 2b Erläuterungsdiagramme.

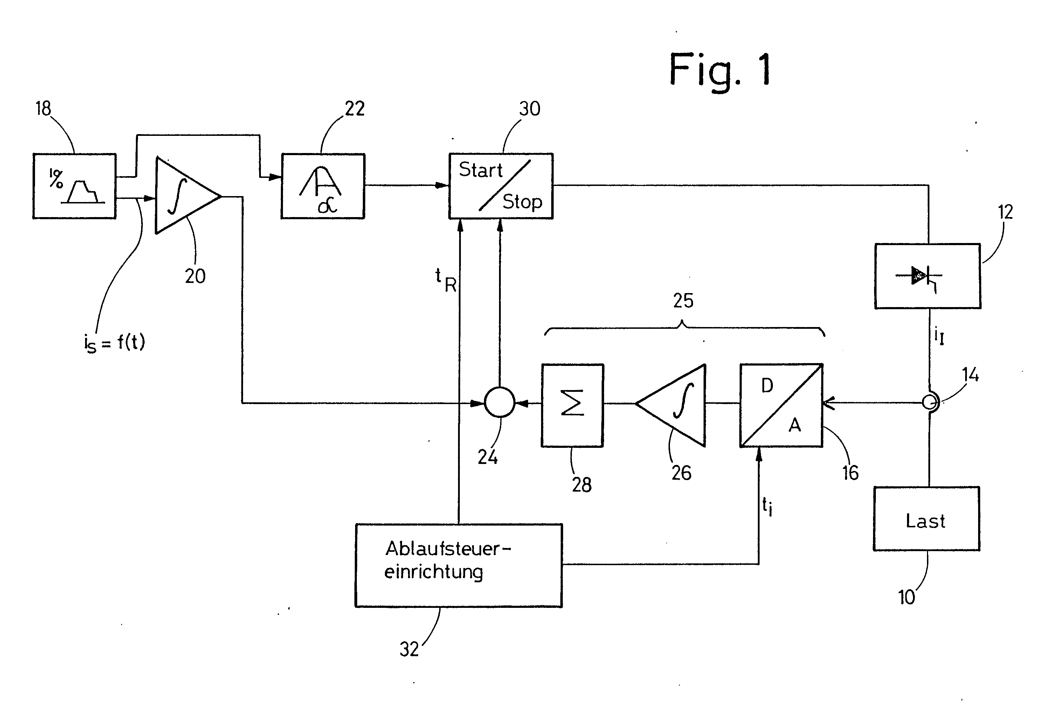

Fig. 1 zeigt ein Blockschaltbild einer Anordnung zum Regeln des Schweißvorganges bei einer Widerstandsschweißmaschine, von der der Einfachheit halber lediglich die Elektroden, zwischen denen zu verschweißende Werkstücke eingespannt werden, allgemein als Last 10 und ein Stellglied 12 (Thyristorgruppen), über das dem ebenfalls nicht dargestellten Schweißtransformator positive bzw. negative Spannungsimpulse zugeführt werden, dargestellt sind. Bei der folgenden Beschreibung ist vorausgesetzt, daß es sich bei der Widerstandsschweißmaschine um eine Dreiphasen-Gleichstrompunktschweißmaschine handelt. Der von der Last 10 aufgenommene Schweiß strom (bei dem es sich um den eigentlichen Schweißstrom, einen Vorwärm-oder einen Nachwärmstrom handelt), wird durch einen Schweißstromfühler 14 gemessen, bei dem es sich in dem dargestellten Ausführungsbeispiel um einen Stromwandler handeln kann, statt dem aber auch ein Digitalstromfühler verwendet werden könnte, wobei dann ein dem Stromfühler nachgeschalteter A/D-Wandler 16 entfallen könnte.

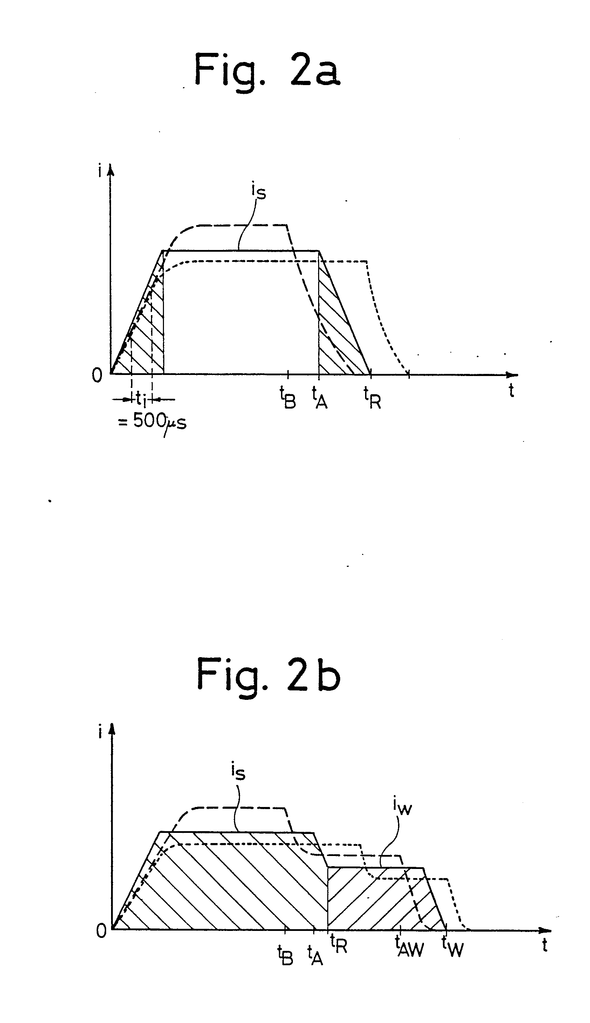

Ein Funktionsgeber 18, der durch eine Bedienungsperson einstellbar ist, versorgt die Anordnung mit der Sollkurve des Schweißstroms $i_S$ = f(t). Die für ein bestimmtes Schweißgut passende Sollkurve wird durch die Bedienungsperson beispielsweise dadurch gewählt, daß mehrere Schweißmuster mit einer anderen Sollkurve geschweißt werden und dann anhand eines Schliffbildes beurteilt wird, welche Sollkurve am besten paßt. In dem hier beschriebenen Ausführungsbeispiel bleibt die Krafteinstellung an den Schweißelektroden jeweils unverändert. Der Funktionsgeber ist mit einem Integrator 20 verbunden, der die gemäß der Sollkurve zuzuführende Soll-Gesamtenergie aus dem Sollwert-Integral $\int i\frac{2}{S} dt$ über einer vorgegebenen Schweißzeit $t_R$ bestimmt. Dieses Sollwert-Integral entspricht in Fig. 2a der Fläche unter der mit ausgezogener Linie dargestellten Kurve für $i_S$. Der Ausgang des Integrators 20 ist mit einem Vergleicher 24 verbunden. Mit dem Ausgang des A/D-Wandlers 16 ist ein Integrator 26 verbunden, dessen Ausgang mit einem saldierenden Speicher 28 verbunden ist. Der A/D-Wandler 16, der Integrator 26 und der saldierende Speicher 28 bilden gemeinsam eine Integriereinrichtung 25. Der Ausgang des saldierenden Speichers 28 ist mit einem weiteren Eingang des Vergleichers 24 verbunden. Der Ausgang des Vergleichers 24 ist mit ei nem ersten Eingang eines Start/Stop-Moduls 30 verbunden. Der Ausgang des Funktionsgebers 18 ist weiter mit einem Stellenwerttabellen-Modul 22 verbunden, dessen Ausgang mit einem zweiten Eingang des Start/Stop-Moduls 30 verbunden ist. Der Stellenwerttabellen-Modul 22 enthält eine gespeicherte Tabelle zur Umwandlung des Soll-Stroms $i_S$ = f(t) in entsprechende Phasenanschnittwinkel $\alpha(t)$. Ein dritter Eingang des Start/Stop-Moduls 30 ist mit einem Ausgang einer Ablaufsteuereinrichtung 32 verbunden, über den dieser entsprechend dem Schweißtakt die Aufsteuerung des Stellglieds 12 startet und stoppt. Ein weiterer Ausgang der Ablaufsteuereinrichtung 32 ist mit einem Takteingang des A/D-Wandlers 16 verbunden, über den dieser für Intervalle von 500 μs, die durch die Netzfrequenz von 50 Hz beim Dreiphasenbetrieb vorgegeben sind, aufgesteuert wird.

Die vorstehend beschriebene Anordnung arbeitet folgendermaßen.

Nachdem der Soll-Schweißstrom $i_S$, welcher mittels des Funktionsgebers 18 vorgegeben wird, über der vorgegebenen Schweißzeit $t_R$ durch den Integrator 20 integriert und somit die zuzuführende Soll-Gesamtenergie bestimmt worden ist, wird diese Soll-Gesamtenergie dem Vergleicher 24 zugeführt. Die Ablaufsteuereinrichtung 32 betätigt den Start/Stop-Modul 30, so daß der Last 10 über das Stellglied 12 ein Ist-Laststrom $i_l$ zugeführt wird, der gleich dem Soll-Strom $i_S$ ist, sofern keine Netzspannungsschwankung (oder irgendein anderer Störeinfluß) auftritt. In diesem Fall sind bei Ablauf der Schweißzeit $t_R$ (vgl. Fig. 2a) die zuzuführende Soll-Gesamtenergie und die der Last 10 zugeführte Ist-energie gleich, so daß das Ausgangssignal des Vergleichers (Fehler-oder Regelabweichungssignal) null ist. Der Vergleicher 24 übersteuert daher nicht das durch die Ablaufsteuereinrichtung 32 an den Start/Stop-Modul 30 abgegebene Schweißtaktsignal, so daß der Schweißstrom erst im Zeitpunkt $t_A$ abgeschaltet wird, so daß er bis zum Zeitpunkt $t_R$, d.h. bis zum Ablauf der Schweißzeit auf null abklingt. Die ansteigende und die abfallende Flanke der Stromkurve $i_S$ sollen in Fig. 2a lediglich den nach einer e-Funktion erfolgenden Stromanstieg bzw. Stromabfall darstellen,weshalb der dargestellte Stromimpuls ideal auch als Rechteck dargestellt werden könnte. Es könnte sich aber auch um Schweißen mit Stromanstieg bzw. Stromabfall handeln, wobei dann die beiden schraffierten Flächen unter dem ansteigenden bzw. unter dem abfallenden Kurvenast als getrennte Flächen behandelt werden würden, wobei dann für die beiden schraffierten Flächen und die zwischen ihnen vorhandene unschraffierte Fläche jeweils die in diesen Bereichen zuzuführende Soll-Teilenergie ermittelt und mit der entsprechenden zugeführten Ist-Teilenergie auf die geschilderte Weise verglichen werden würde.Für die folgende Beschreibung wird aber angenommen,daß der gezeigte Stromanstieg und der gezeigte Stromabfall vernachlässigbar sind und daß die Soll-Gesamtenergie jeweils für die Gesamtfläche unter den drei in Fig. 2a gezeigten Kurven bestimmt wird.

Nachdem die Stromzufuhr zu der Last 10 begonnen hat, wird durch die Integriereinrichtung 25 jeweils für $t_i$ = 500 μs die zugeführte Ist-Energie aus dem abgefühlten Ist-Strom $i_l$ durch Integrieren über der Zeit $t_i$ bestimmt, wobei die Ist-Energiebeiträge jedes Intervalls von 500 μs in dem Speicher 28 aufsummiert werden. Sobald der Vergleicher 24 bei dem Vergleich des zugeführten Ist-Energie-Saldos mit der Soll-Gesamtenergie aus dem Integrator 20 feststellt, daß diese übereinstimmen, gibt er ein Ausgangssignal an den Start/Stop-Modul 30 ab, welches das durch die Ablaufsteuereinrichtung an den Start/Stop-Modul abgegebene Signal übersteuert, so daß der Schweißstrom in einem Zeitpunkt $t_B$ sofort abgeschaltet wird. Da in diesem Fall angenommen worden ist, daß eine positive Netzspannungsschwankung (d.h. eine Netzspannungserhöhung) aufgetreten ist, liegt der Zeitpunkt $t_B$ vor dem Zeitpunkt $t_A$ (Abbruch bei nicht vorhandener Netzspannungsschwankung). Da die Fläche unter der gestrichelt dargestellten Kurve gleich der Fläche unter der mit ausgezogener Linie dargestellten Kurve ist, entspricht die dem Schweißpunkt zugeführte Gesamtenergie der Soll-Gesamtenergie, lediglich mit dem Unterschied, daß diese Energie dem Schweißpunkt in einer Zeit zugeführt worden ist, die kürzer als die vorgegebene Schweißzeit $t_R$ ist. Wenn die Netzspannung in negativer Richtung schwankt (d.h. Netzspannungsverkleinerung), wird die Soll-Gesamtenergie erst in einem Zeitpunkt erreicht, der nach dem Zeitpunkt $t_R$ liegt. Das Abschalten des Schweißstroms erfolgt daher nicht im Zeitpunkt $t_A$, sondern in einem späteren Zeitpunkt. Das Ausgangssignal null des Vergleichers 24 bei Soll-Istwert-Gleichheit führt nur dann zum Übersteuern der Ablaufsteuereinrichtung 32, wenn diese Gleichheit vor oder nach dem Zeitpunkt $t_A$ festgestellt wird (d.h. $t_B \neq t_A$). Bei idealem Rechteckverlauf des Stromimpulses $i_S$ wären $t_R$ und $t_A$ selbstverständlich identisch.

Fig. 2b zeigt die Stromkurven für Schweißen mit Stromprogramm, gemäß welchem sich an die Schweißzeit $t_R$ noch eine Nachwärmzeit anschließt, während welcher mit geringerer Stromstärke gearbeitet wird. Die ansteigenden und abfallenden Flanken der Stromkurven werden bei der folgenden Beschreibung wieder außer Betracht gelassen. In diesem Fall werden zwei Sollwert-Integrale bestimmt, und zwar für die Zeiten $0-t_R$ und $t_R-t_w$ für die vorgegebene Schweißzeit bzw. die vorgegebene Nachwärmzeit. Wenn die Netzspannung über den Nennwert steigt, erfolgt das Abschalten des Schweißstroms nicht erst im Zeitpunkt $t_A$, sondern bereits im Zeitpunkt $t_B$. Der Strom klingt dann nicht auf den Nachwärmstrom $i_w$ ab, sondern bleibt wegen der höheren Netzspannung oberhalb desselben, wie es die gestrichelte Kurve in Fig.2b zeigt. Die Schweißzeit und die Nachwärmzeit sind entsprechend kürzer, so daß auch die Stromzeiten jeweils entsprechend kürzer sind wie in dem in Fig. 2a dargestellten Fall. Bei einer Netzspannungsabsenkung ist es umgekehrt (vgl. die in Fig. 2b punktierte Kurve). In jedem Fall wird wieder die für jeden Stromkurventeil vorgegebene zuzuführende Gesamtenergie durch entsprechendes Verlängern oder Verkürzen der Stromzeit eingehalten, so daß der Schweißpunkt immer die zuzuführende Soll-Gesamtenergie empfängt, wodurch die Güte aller Schweißpunkte sichergestellt wird. In der Praxis ist die Regelanordnung so ausgelegt, daß sie die Fläche unter der Stromkurve entsprechend dem zu fahrenden Stromprogramm selbständig aufteilt.

**Ansprüche**

1. Verfahren zum Regeln des Schweißvorganges bei einer Widerstandsschweißmaschine durch Abfühlen des Schweißstromes und Steuern der Schweißzeit,

**gekennzeichnet** durch folgende Schritte:
    a) Vorgeben des Soll-Schweißstromes $i_S$ und Bestimmen der zuzuführenden Soll-Gesamtenergie aus dem Sollwert-Integral $\int i_S^2 \, dt$ über einer vorgegebenen Schweißzeit $t_R$,
    b) Messen des Ist-Schweißstromes $i_I$,
    c) Bestimmen der zugeführten Ist-Energie aus dem Istwert-Integral $\int i_I^2 \, dt$,
    d) Vergleichen der zugeführten Ist-Energie mit der Soll-Gesamtenergie, und, sobald die Ist-Energie mit dem Sollwert-Integral übereinstimmt,
    e) Abschalten des Schweißstromes,
    f) Wiederholen der Schritte a) -e).

2. Verfahren nach Anspruch 1, dadurch gekennzeichnet, daß der Schritt b) in festen Intervallen $t_i$ ausgeführt wird und daß in dem Schritt c) die zugeführte Ist-Energie für jeden gemessenen Strom über jedem Intervall $t_i$ bestimmt, jeweils saldierend abgespeichert und dann in dem Schritt d) mit der Soll-Gesamtenergie verglichen wird.

3. Verfahren nach Anspruch 1 oder 2, dadurch gekennzeichnet, daß als vorgegebene Schweißzeit $t_R$ die Schweißzeit für einen Schweißpunkt oder ein Teil derselben gewählt wird, wobei in letzterem Fall sich an das Abschalten des Schweißstromes das Einstellen eines neuen Soll-Stromes unmittelbar anschließt.

4. Anordnung zur Durchführung des Verfahrens nach Anspruch 1, mit einem Schweißstromfühler sowie mit einer Ablaufsteuereinrichtung und einem Start/Stop-Modul zum Steuern der Schweißzeit, gekennzeichnet durch einen ersten Integrator (20) zum Bestimmen der zuzuführenden Soll-Gesamtenergie aus einem mittels eines Funktionsgebers (18) vorgegebenen Soll-Schweißstrom und einer vorgegebenen Schweißzeit,

durch eine mit dem Schweißstromfühler (14) verbundene Integriereinrichtung (25) zum Bestimmen der zugeführten Ist-Energie,

durch einen mit dem ersten Integrator (20) und der Integriereinrichtung (25) verbundenen Soll-Gesamtenergie/ Ist-Energie-Vergleicher (24) zum Abschalten des Schweißstromes mittels des Start/Stop-Moduls (30) bei Soll-Istwert-Gleichheit durch Übersteuern der Ablaufsteuereinrichtung - (32).

5. Anordnung nach Anspruch 4, dadurch gekennzeichnet, daß die Integriereinrichtung (25) ein zweiter Integrator (26) mit einem vorgeschalteten A/D-Wandler (16) und einem nachgeschalteten saldierenden Speicher (28) ist und daß die Ablaufsteuereinrichtung (32) einen mit dem A/D-Wandler (16) verbundenen Intervallausgang ($t_I$) und einen mit dem Start/Stop-Modul (30) verbundenen Schweißtaktausgang ($t_R$) hat.

6. Anordnung nach Anspruch 5, dadurch gekennzeichnet, daß der Ausgang des Funktionsgebers (18) über einen Stellwerttabellen-Modul (22) mit dem Start/Stop-Modul (30) verbunden ist.

# Fig. 1

0 218 106

0 218 106

# Fig. 2a

# Fig. 2b

**Europäisches Patentamt**

**EUROPÄISCHER RECHERCHENBERICHT**

Nummer der Anmeldung

## EINSCHLÄGIGE DOKUMENTE

EP 86112356.0

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | <u>CH - A - 591 916</u> (MESSER GRIESHEIM)<br>* Spalten 2-5; Fig. 1,2 *<br><br>-- | 1-5 | B 23 K 11/24 |
| X | <u>DE - C2 - 1 006 550</u> (S.A. ELECTRO-MÉCHANIQUE)<br>* Spalten 4-7; Fig. 1-3 *<br><br>-- | 1 | |
| X | <u>DD - A - 203 840</u> (VEB KETTEN- U. NAGELWERKE)<br>* Seiten 4-7; Fig. 1,2 *<br><br>-- | 1,2,4 | |
| X | <u>DE - A1 - 2 322 748</u> (DRECHSLER)<br>* Seiten 2,3 *<br><br>---- | 1,3,4 | |

RECHERCHIERTE SACHGEBIETE (Int. Cl.4)

B 23 K 11/00

Der vorliegende Recherchenbericht wurde für alle Patentansprüche erstellt.

| Recherchenort | Abschlußdatum der Recherche | Prüfer |
|---|---|---|
| WIEN | 14-11-1986 | KUTZELNIGG |